(19) Europäisches Patentamt
European Patent Office
Office européen des brevets

(11) Veröffentlichungsnummer: **0 324 356 B1**

(12) **EUROPÄISCHE PATENTSCHRIFT**

(45) Veröffentlichungstag der Patentschrift: **07.04.93**

(51) Int. Cl.[5]: **C08L 67/02**, C08K 5/53, C08L 85/02

(21) Anmeldenummer: **89100063.0**

(22) Anmeldetag: **04.01.89**

Die Akte enthält technische Angaben, die nach dem Eingang der Anmeldung eingereicht wurden und die nicht in dieser Patentschrift enthalten sind.

(54) **Flammgeschützte Polyethylenterephthalatformmassen.**

(30) Priorität: **13.01.88 DE 3800672**

(43) Veröffentlichungstag der Anmeldung:
**19.07.89 Patentblatt 89/29**

(45) Bekanntmachung des Hinweises auf die Patenterteilung:
**07.04.93 Patentblatt 93/14**

(84) Benannte Vertragsstaaten:
**DE FR GB IT**

(56) Entgegenhaltungen:
**DE-A- 2 458 967**
**DE-B- 2 111 202**
**US-A- 3 987 008**

**"Fire and Flame Retardant Polymers", A. Jehaskel, Noyes Data Cor. Park Ridge, N.Y. (1979), S. 71-72**

(73) Patentinhaber: **BAYER AG**

**W-5090 Leverkusen 1 Bayerwerk(DE)**

(72) Erfinder: **Joswig, Thomas, Dr.**
**Am Alsbach 11**
**W-4050 Viersen 1(DE)**
Erfinder: **Kauth, Hermann, Dr.**
**Kolpingstrasse 34**
**W-4150 Krefeld(DE)**
Erfinder: **Köhler, Karl-Heinz, Dr.**
**Buschstrasse 165**
**W-4150 Krefeld(DE)**

EP 0 324 356 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind flammgeschützte Polyethylenterephthalatformmassen, die Polyalkylphosphonate und Verstärkungsmittel enthalten.

Aus der DE-OS 24 58 967 sind flammwidrige Polyestermassen bekannt, die ein Polyalkylenterephthalat, das in der Hauptkette Bindungseinheiten basierend auf bromierte organische aromatische Verbindungen besitzt, sowie hochmolekulare organische Phosphorverbindungen enthalten. Die in der DE-OS 24 58 967 beschriebenen Polyestermassen besitzen den Nachteil, daß sie copolymerisiert stets organisch gebundenes Brom enthalten (Gefahr der Dioxinbildung beim Brand) und, da es sich um Copolymerisate handelt, wesentlich schwieriger herzustellen sind.

Aus der DE-OS 22 53 207 sind flammhemmende thermoplastische Polyesterharzzusammensetzungen bekannt, die als Bestandteile ein entflammbares hochmolekulares lineares Polyesterharz und als flammhemmenden Zusatzstoff Arylphosphonate enthalten. Aus der DE-OS 21 11 202 sind ebenfalls flammabweisende thermoplastische Polyester mit einem Gehalt an phosphorhaltigen Zusätzen bekannt, wobei als phosphorhaltige Zusätze Polyarylphosphonate genannt werden. Die in den beiden Offenlegungsschriften beschriebenen flammhemmenden thermoplastischen Polyester besitzen, wie eigene Versuche zeigten, nicht ausreichende Flammschutzeigenschaften. Nachteilig ist ferner, daß sich die Polyarylphosphonate nur schlecht in die thermoplastischen Polyester einarbeiten lassen.

Aus der DE-OS 21 32 350 sind phosphorhaltige Polyestermischungen mit verbesserten flammwidrigen Eigenschaften bekannt, die als phosphorhaltige Zusätze sowohl Polyalkylphosphonate als auch Polyarylphosphonate enthalten können. In der genannten DE-OS 21 32 350 werden auch verstärkte Polyesterpreßharzmischungen beansprucht (Ansprüche 7 bis 10), die Polypropylenterephthalat oder Polybutylenterephthalat als Polyester enthalten sowie verstärkende Füllstoffe, wie Glasfasern, und Polyphosphonat oder Polyphosphonatphosphat. Wie eigene Versuche zeigten, besitzen die verstärkten Polybutylenterephthalatpreßharzmischungen mit Polyalkylphosphonat als flammhemmender Zusatz keine ausreichende flammhemmende Wirkung.

Gegenstand der Erfindung sind nun flammgeschützte Polyethylenterephthalatformmassen aus

A) 45 bis 80 Gew.-Teilen Polyethylenterephthalat,

B) 15 bis 40 Gew.-Teilen anorganischen Verstärkungsmitteln,

C) 15 bis 20 Gew.-Teilen Polyalkylphosphonaten der Formel

$E_1$

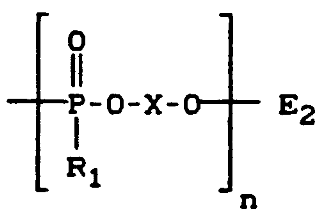

(I),

worin

$R_1$ für $C_1$- bis $C_6$-Alkyl steht,

X für die Formel

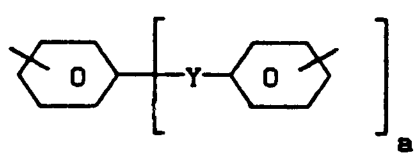

steht,

in der

Y eine Einfachbindung ist oder $C_1$- bis $C_3$-Alkylen, $C_5$- bis $C_{12}$-Cycloalkylen oder O, S, CO, $SO_2$ bedeutet und

a für 0 oder 1 steht, oder

X Naphthylen bedeutet,

$E_1$ für O-$R_2$, OH, O-X-OH steht, wobei $R_2$ für $C_6$-bis $C_{10}$-Aryl steht und X die obengenannte

Bedeutung besitzt,

$E_2$

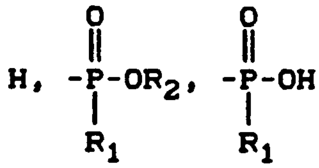 bedeutet, wobei

$R_1$ und $R_2$ die obengenannte Bedeutung haben und

n für ganze Zahlen von 2 bis 100 steht, und

D) gegebenenfalls 0,1 bis 10 Gew.-Teilen Verarbeitungshilfsmitteln.

Die erfindungsgemäß eingesetzten Polyethylenterephthalate stellen Polykondensationsprodukte dar aus aromatischen Dicarbonsäuren oder deren reaktionsfähigen Derivaten (wie den Dimethylestern) und aliphatischen Diolen oder deren reaktionsfähigen Derivaten, wobei mindestens 90 Mol-%, bezogen auf den Diol-Anteil, Ethylenglykol-Einheiten sind und 10 Mol-%, bezogen auf den Diolanteil, aliphatische oder cycloaliphatische, verzweigte oder unverzweigte $C_3$- bis $C_{18}$-Dioleinheiten oder Polyalkylenoxideinheiten sein können (vgl. z.B. DE 25 07 776, 24 07 074 und 24 07 776). Bevorzugte Polyethylenterephthalate enthalten mindestens 95 Mol-% Ethylenglykol-Einheiten, bezogen auf den Gesamtdiolanteil. Besonders bevorzugt ist reines Polyethylenterephthalat.

Die Polyethylenterephthalate lassen sich nach bekannten Methoden herstellen (s. z.B. Kunststoff-Handbuch, Band VIII, Seite 695 ff, Carl-Hanser-Verlag, München 1973).

Die erfindungsgemäß eingesetzten Polyethylenterephthalate besitzen Intrinsic-Viskositäten von etwa 0,4 bis 1,3 dl/g, vorzugsweise 0,5 bis 0,9 dl/g, gemessen in Phenol/o-Dichlorbenzol (1:1 Gew.-Teile) in einer Konzentration von 5 g/l bei 25 °C.

Die erfindungsgemäß eingesetzten anorganischen Verstärkungsmittel umfassen alle bekannten für die Verstärkung von Polyalkylenterephthalate bekannten Mittel. Zum Beispiel werden genannt: Glasfasern, Glaskugeln und/oder mineralische Füllstoffe, wie in Katz und Milewski, "Handbook of Fillers and Reinforcements for Plastics", Nostrand-Verlag, 1978 beschrieben. Bevorzugt werden als anorganische Verstärkungsmittel Glasfasern eingesetzt. Die eingesetzten Glasfasern besitzen im allgemeinen einen Durchmesser von etwa 6 bis 15 µm, bevorzugt 8 bis 13 µm, und ein Längen- zu Dicken-Verhältnis von größer als 45, bevorzugt 50 bis 200.

Als mineralische Füllstoffe seien beispielsweise genannt: Kaolin, Talkum, Glimmer, Quarzmehl, Gesteinsmehl, Erdalkalimetallcarbonate, Erdalkalimetalloxide, Titandioxid und/oder Zinksulfid. Die eingesetzten mineralischen Füllstoffe besitzen mittlere Teilchendurchmesser von weniger als 20 µm, bevorzugt weniger als 10 µm, insbesondere 2 bis 8 µm.

Die anorganischen Verstärkungsmittel werden üblicherweise in Mengen von 15 bis 40 Gew.-Teilen, bevorzugt 20 bis 35 Gew.-Teilen, besonders bevorzugt 25 bis 30 Gew.-Teilen eingesetzt.

Die erfindungsgemäß einzusetzenden Polyalkylphosphonate sind beispielsweise beschrieben in US 26 82 522, DE-OS 29 25 207 oder DE-OS 29 44 093.

Bevorzugt werden Polyalkylphosphonate der Formel (II)

$E_3$

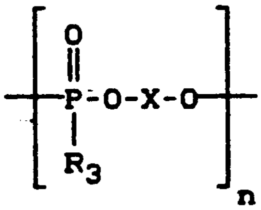 $E_4$ (II) eingesetzt,

worin

$R_3$ Methyl oder Ethyl bedeutet,

X für Phenylen, Bisphenylen, $C_1$- bis $C_3$-Alkylbisphenylen, $C_5$- bis $C_{12}$-Cycloalkylbisphenylen, Sulfonylbisphenylen, Oxobisphenylen, Thiobisphenylen, Carbonylbisphenylen oder Naphthylen steht,

$E_3$

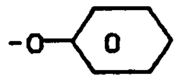 , -OH, -O-X-OH bedeutet,

wobei

X die obengenannte Bedeutung hat,

$E_4$

für -H, 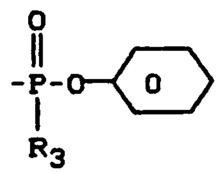 , 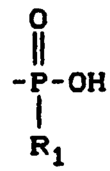 steht,

wobei

$R_3$ die obengenannte Bedeutung besitzt, und

n für ganze Zahlen von 5 bis 80 steht.

Ganz besonders bevorzugt werden Polyalkylphosphonate eingesetzt, die der allgemeinen Formel (II) entsprechen und in der

$E_3$

für 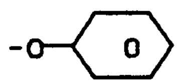 steht,

$E_4$

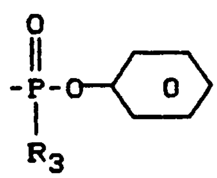 bedeutet,

$R_3$ Methyl bedeutet und

X

für 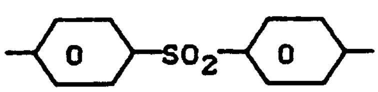 ; 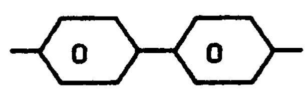 ;

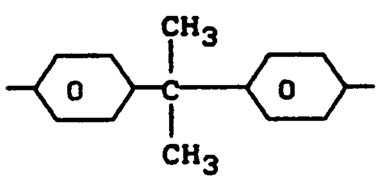 oder 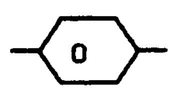 steht und

n 5 bis 50 bedeutet.

Beispielsweise werden als Polyalkylphosphonate genannt:

Bisphenol-F-polymethanphosphonat,

Bisphenol-A-polymethanphosphonat,

Dioxidiphenylpolymethanphosphonat,
Dioxidiphenylsulfonpolymethanphosphonat,
Catecholpolymethanphosphonat,
Resorcinpolymethanphosphonat und/oder
Hydrochinonpolymethanphosphonat,
bevorzugt
Bisphenol-F-polymethanphosphonat,
Dioxidiphenylpolymethanphosphonat und/oder
Hydrochinonpolymethanphosphonat.

Als geeignete Katalysatoren können für die Umesterung eingesetzt werden: alkalische Katalysatoren wie z. B. Alkaliphenolate, Alkalihydride, Erdalkalihydride, Alkaliamide oder Erdalkaliamide, neutrale Katalysatoren wie z. B. Tetralakyltitanate, Trialkylzinnacylate, Dialkylzinnoxide, Dialkylzinnacylate, aber auch Imidazol und Erdalkalihalogenide.

Die erfindungsgemäß einzusetzenden Polyphosphonate können gegebenenfalls durch geringe Mengen mehrfunktioneller Verbindungen verzweigt sein. Die Verzweigermenge ist ≦3 mol.-%, bezogen auf eingesetzte Menge Bisphenol. Als Verzweiger sind trifunktionelle und tetrafunktionelle Hydroxyverbindungen wie z. B. 4,6-Dimethyl-2,4,6-tri-(4-hydroxyphenyl)heptan; 1,3,5-tri-(4-hydroxyphenyl)-benzol und 1,4-Bis-(4,4′-dihydroxytriphenylmethyl)benzol, trifunktionelle oder tetrafunktionelle Carbonsäurearylester wie z. B. Trimesinsäuretriphenylester und Pyromellitsäuretetraphenylester und Phosphorsäuretriarylester wie z. B. Triphenylphosphat geeignet.

Die erfindungsgemäß einzusetzenden Polyalkylphosphonate besitzen im allgemeinen eine relative Lösungsviskosität von 1,05 (entsprechend einer mittleren Molmasse von 2000 [n ca. 8 Monomereinheiten]) bis 1,40 (entsprechend einer mittleren Molmasse von 22000 [n ca. 90 Monomereinheiten]). Die Messung der Lösungsviskosität erfolgte in Methylenchlorid (0,5 g/100 ml Lösung) bei 25 °C.

Erfindungsgemäß werden die Polyalkylphosphonate in Mengen von 15 bis 20 Gew.-Teilen eingesetzt.

Als Verarbeitungshilfsmittel können den erfindungsgemäßen Formmassen zugesetzt werden: die bekannten Kristallisationshilfsmittel, Entformungsmittel, Stabilisatoren, Fließhilfsmittel, Farbmittel und/oder Farbpigmente. Als Kristallisationshilfsmittel kommen beispielsweise in Frage anorganische kristalline, hochschmelzende Verbindungen, die als Nukleierungsmittel wirksam sind, wie Mikro-Talk, Metallsalze von aliphatischen und/oder aromatischen nieder- oder hochmolekularen Carbonsäuren, die in WO 85 (03717, EP 0 029 285, EP 0 037 666, EP 0 034 773, EP 0 112 167, EP 0 021 648, EP 0 102 768 beschrieben sind, sowie Metallsalze von aliphatischen und/oder aromatischen Sulfonsäuren (EP 1 78 807).

Als Entformungsmittel können alle bekannten Produkte, wie Esterwachse (z.B. Montanwachs), Amidwachs wie Rhenax® und/oder Oligoethylene verwendet werden. Als Weichmacher kommen z.B. aliphatische oligomere Polyester in Frage (siehe EP 29 931 und DE 27 06 128).

Die Verarbeitungshilfsmittel können in Mengen von 0,1 bis 10 Gew.-Teilen, bevorzugt 0,3 bis 5 Gew.-Teilen, besonders bevorzugt 0,4 bis 2 Gew.-Teilen den Polyethylenterephthalatformmassen zugesetzt werden.

Die Herstellung der Mischungen aus thermoplastischem Polyethylenterephthalat, Verstärkungsmittel, Polyalkylphosphonat und gegebenenfalls weiteren Verarbeitungshilfsmitteln kann in den üblichen Mischaggregaten, wie Walzen, Knetern, Ein- und Mehrwellenextrudern, erfolgen. Die Verarbeitungshilfsmittel können als Konzentrate in thermoplastischen Polyester in Granulatform oder als Pulvermischung bei der Compoundierung der Komponenten zudosiert werden. Die Temperatur bei der Herstellung der Mischungen beträgt im allgemeinen mindestens 20 °C und sollte höchstens 70 °C oberhalb des Schmelzpunktes des Polyesters liegen.

Das Herstellungsverfahren kann sowohl diskontinuierlich als auch kontinuierlich unter Bedingungen durchgeführt werden, bei denen eine Oxidation weitgehend ausgeschlossen ist, d.h. unter Schutzgasatmosphäre. Als Schutzgas eignet sich z.B. Stickstoff, Kohlendioxid und/oder Argon.

Die Polymermischungen können gegebenenfalls einer thermischen Nachbehandlung in der festen Phase bei Temperaturen von 100 bis 220, bevorzugt 180 bis 210 °C unterzogen werden.

Die thermoplastische Verarbeitung der erfindungsgemäßen Formmassen zu Formkörpern kann bei Massetemperaturen bis 40 °C oberhalb des Polyesterschmelzpunktes (250 bis 290 °C) und bei Schmelzestandzeiten bis 9 Minuten (1 bis 9 Minuten) erfolgen. Bevorzugt werden Verarbeitungsbedingungen gewählt, bei denen die Massetemperaturen nicht höher als 270 °C und die Schmelzestandzeiten nicht höher als 9 Minuten sind. Bei den besonders bevorzugten Verarbeitungsbedingungen liegen die Massetemperaturen nicht höher als 260 °C und die Schmelzestandzeiten nicht höher als 6 Minuten.

Die erfindungsgemäßen flammgeschützten Polyethylenterephthalatformmassen können eingesetzt werden bei der Herstellung von Formkörpern, Fasern oder Filmen.

Die erfindungsgemäßen flammgeschützten Polyethylenterephthalatformmassen besitzen folgende Vorteile gegenüber den aus dem Stand der Technik bekannten Flammgeschützten, verstärkten Polyethylenterephthalatformmassen: Sie besitzen einen höheren Grad an Flammwidrigkeit gegenüber den bisher mit Polyphosphonaten flammgeschützten Formmassen und die Gefahr der Abspaltung toxischer Gase (Dioxine) gegenüber mit Sb/Br-Verbindungen flammgeschützten Formmassen ist geringer.

## Beispiele

### I. Eingesetzte Komponenten:

1. Polybutylenterephthalat mit einer Intrinsic-Viskosität von 1,20 dl/g, gemessen in Phenol/o-Dichlorbenzol-Gemisch (Gew.-Verhältnis 1:1), 25 °C, Ubbelohde-Viskosimeter (als Vergleich, s. Beispiel III,b).
2. Polyethylenterephthalat mit einer Intrinsic-Viskosität von 1,20 dl/g, bestimmt wie unter 1. beschrieben (erfindungsgemäß).
3. Polyalkylphosphonate:
   a) Dioxidiphenylpolymethanphosphonat, hochmolekular; POP I,
   b) Bisphenol-A-polymethanphosphonat, niedermolekular, POP II.

### II. Herstellung der Polyalkylphosphonate

#### 1. POP I

25 Mol (4650 g) 4,4′-Dioxodiphenyl,
0,125 Mol (40,7 g) Triphenylphosphat,
25,1 Mol (6215 g) Methanphosphonsäurediphenylester und
4,31 mMol (0,5 g) Natriumphenolat
werden unter Stickstoff bei 250 °C intensiv in einem Autoklaven vermischt. Innerhalb von 3 Stunden wird unter einem von 250 auf 100 mbar absinkendem Vakuum und bei einer von 250 °C auf 265 °C ansteigenden Temperatur Phenol über eine auf 100 °C beheizte Kolonne abdestilliert. Anschließend wird die Umesterung 5 Stunden unter einem allmählich auf 0,3 mbar absinkenden Druck und einer auf 310 °C ansteigenden Temperatur fortgesetzt, wobei die Viskosität der Schmelze ansteigt. Man belüftet mit Stickstoff, läßt das Polymer bei stillstehendem Rührer absitzen und erhält 5,3 kg Polyphosphonat durch Abspinnen unter Druck und Granulieren des Schmelzstranges. Das Polyphosphonat hat eine relative Viskosität von $\eta$rel = 1,28 (gemessen in Methylenchlorid, 0,5 g/100 ml Lösung).

#### 2. POP II

25 Mol (3800 g) Bisphenol-A
25,25 Mol (6262 g) Methanphosphonsäurediphenylester und
4,31 mMol (0,5 g) Natriumphenolat
werden wie unter 1. umgesetzt. Man erhält 4,8 kg Polyphosphonat mit einer relativen Viskosität von 1,10 (gemessen in Methylenchlorid, 0,5 g/100 ml Lösung).

### III. Herstellung, Verarbeitung und Prüfung der Formmassen

Das Polyethylenterephthalat wird als Granulat eingesetzt; die Polyalkylphosphonate (POP I und POP II) werden in Form von Pulver eingesetzt. Die eingesetzten Komponenten werden in einem Zweiwellenextruder geschmolzen, vermischt und zu Strängen extrudiert und granuliert. Die Herstellung der Formmassen kann beispielsweise mit einem Extruder, ZSK 32 der Firma Werner und Pfleiderer, bei Massetemperaturen von 270 bis 280 °C und bei einer Schneckendrehzahl von 130 U/min sowie einem Durchsatz von 8 kg/h erfolgen.

Nach ausreichender Trocknung (z.B. 3 bis 4 Stunden bei 120 °C) werden die Formmassen auf üblichen Spritzgußmaschinen bei Massetemperaturen von 250 bis 270 °C, einer Formtemperatur von 80 bis 130 °C und einer Schmelzestandzeit von nicht länger als 9 Minuten zu Formkörpern bzw. Normprüfstäben verspritzt.

Die Prüfung der Brandwidrigkeit erfolgt nach den Richtlinien der Underwriter Laboratories (UL-94-Test). Die Ergebnisse sind in den nachfolgenden Tabellen zusammengefaßt. Die Mengen der eingesetzten

Komponenten sind in Gewichtsteilen angegeben.

a) Beispiele mit verschiedenen Polyalkylphosphonat gehalten:

Tabelle I

| | Beispiele | | | | | |
|---|---|---|---|---|---|---|
| | VB1 x) | 2 xx) | 3 xx) | VB2 x) | 5 xx) | 6 xx) |
| PET<br>POP I<br>POP II<br>Glasfaser | 60<br>10<br>-<br>30 | 55<br>15<br>-<br>30 | 50<br>20<br>-<br>30 | 60<br>-<br>10<br>30 | 55<br>-<br>15<br>30 | 50<br>-<br>20<br>30 |
| UL-94-Test (1,6 mm) | | | | | | |
| 2-Tage-Wert | | | | | | |
| Gesamtnachbrennzeit (S) | 54 | 0 | 0 | 89 | 22 | 3 |
| Verhalten bei | | | | | | |
| 1. Beflammung<br>2. Beflammung tb<br>Bewertung | tn<br>tb<br>V2 | tn<br>tnb<br>V0 | tn<br>tn<br>V0 | tb<br>tb<br>V2 | tn<br>tnb<br>V0 | tn<br>tn<br>V0 |
| 7-Tage-Wert | | | | | | |
| Gesamtnachbrennzeit (S) | 20 | 4 | 0 | 79 | 17 | 5 |
| Verhalten bei | | | | | | |
| 1. Beflammung<br>2. Beflammung<br>Bewertung | tn<br>tb<br>V2 | tn<br>tnb<br>V0 | tn<br>tn<br>V0 | tb<br>tb<br>V2 | tn<br>tb<br>V2 | tn<br>tn<br>V0 |
| UL-94-Test (0,8 mm) | | | | | | |
| 2-Tage-Wert | | | | | | |
| Gesamtnachbrennzeit (S) | 30 | 2 | 0 | 27 | 25 | 14 |
| Verhalten bei | | | | | | |
| 1. Beflammung<br>2. Beflammung<br>Bewertung | tb<br>tb<br>V2 | tnb<br>tnb<br>V0 | tn<br>tnb<br>V0 | tb<br>tb<br>V2 | tn<br>tb<br>V2 | tn<br>tb<br>V2 |
| 7-Tage-Wert | | | | | | |
| Gesamtnachbrennzeit (S) | 3 | 7 | 0 | 29 | 34 | 6 |
| Verhalten bei | | | | | | |
| 1. Beflammung<br>2. Beflammung<br>Bewertung | tb<br>tb<br>V2 | tnb<br>tb<br>V2 | tn<br>tnb<br>V0 | tb<br>tb<br>V2 | tb<br>tb<br>V2 | tn<br>tb<br>V0 |
| Bewertungsskala: V0 > V1 > V2 > nb (nicht bestanden)<br>Abkürzungen: tb = tropft brennend<br>tn = tropft nicht<br>tnb = tropft nicht brennend | | | | | | |

x) Vergleichsbeispiele
xx) erfindungsgemäß

b) Vergleich von Polyalkylphosphonaten (erfindungsgemäß) mit Polyarylphosphonaten (Stand der Technik)

Tabelle II

| | Vergleichsbeispiel 1 | Vergleichsbeispiel 3 |
|---|---|---|
| PET<br>POP I<br>Glasfasern<br>UL-94-Test | 60<br>10<br>30<br>1,6 mm/0,8 mm | 60<br>10 (Polyarylphosphonat der unten angegebenen Formel)<br>30<br>1,6 mm/0,8 mm |
| 2-Tage-Wert | | |
| Gesamtnachbrennzeit (s) | 54/3 | 118/145 |
| Verhalten bei | | |
| 1. Beflammung<br>2. Beflammung<br>Bewertung | tn/tb<br>tb/tb<br>V2/V2 | tb/tb<br>tb/tb<br>V2/nb |
| 7-Tage-Wert | | |
| Gesamtnachbrennzeit (s) | 20/30 | 96/57 |
| Verhalten bei | | |
| 1. Beflammung<br>2. Beflammung<br>Bewertung | tn/tb<br>tb/tb<br>V2/V2 | tb/tb<br>tb/tb<br>V2/V2 |

Das Vergleichsbeispiel enthält als Polyarylphosphonat:

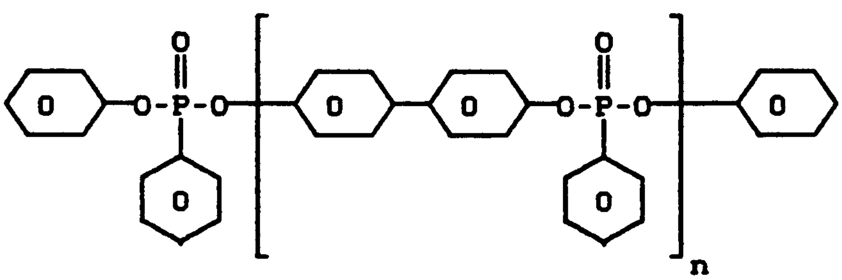

n = 2 bis 100 (hergestellt gemäß der Vorschrift für POP I)
relative Viskosität: 1,17.

Bei den Versuchen mit Polyalkylphosphonaten und Polyarylphosphonaten zeigte sich, daß das Polyarylphosphonat nur mit bis zu 10 Gew.-Teilen, nicht aber mit 15 Gew.-Teilen, compoundiert werden konnte.

Aus der Tabelle II geht eindeutig das bessere Brandverhalten von PET in Mischung mit POP I, einem Polyalkylphosphonat, hervor.

c) Vergleich zwischen unverstärktem und mit Glasfasern verstärktem PET und unverstärktem und mit Glasfasern verstärktem PBT

**Tabelle III:**

| | PET (unverstärkt) (Vergleichsbeispiel | PET (glasfaserverstärkt) (gemäß Beispiel 2) | PBT (unverstärkt) (Vergleichsbeispiel) | PBT (glasfaserverstärkt) (Vergleichsbeispiel) |
|---|---|---|---|---|
| UL-94-Test | 1,6/0,8 mm | 1,6/0,8 mm | 1,6/0,8 mm | 1,6/0,8 mm |
| 2-Tage-Wert Gesamtnachbrennzeit (sec) | 11/1 | 0/7 | 4/17 | ))300/96 |
| Verhalten bei: | | | | |
| 1. Beflammung | tb/tb | tn/tnb | tb/tb | tb/tb |
| 2. Beflammung | tnb/tnb | tnb/tnb | tb/tb | tn/tb |
| Bewertung: | V2/V2 | V0/V0 | V2/V2 | nb/nb |
| 7-Tage-Wert Gesamtnachbrennzeit (sec) | 17/9 | 4/2 | 5/15 | 268/96 |
| Verhalten bei: | | | | |
| 1. Beflammung | tnb/tb | tn/tnb | tb/tb | tb/tb |
| 2. Beflammung | tb/tb | tnb/tnb | tb/tb | tb/tn |
| Bewertung: | V2/V2 | V0/V0 | V2/V2 | nb/nb |

Bewertungsskala: V0 >> V1 >> V2 >> nb (nicht bestanden)

Abkürzungen: tb = tropft brennend

tn = tropft nicht

tnb = tropft nicht brennend

Alle Proben enthielten 15 Gew.-Teile POP I. Die verstärkten Proben enthielten 30 Gew.-Teile Glasfasern.

Ergebnis:

Es zeigt sich der Unterschied zwischen PET und PBT. Während bei unverstärkten Einstellungen jedesmal eine V2 Bewertung erreicht wird, steigt die Bewertung beim PET beim Zusatz von Glasfasern auf V0 an, während sie im PBT auf "nicht bestanden" absinkt.

**Patentansprüche**

**1.** Flammgeschützte Polyethylenterephthalatformmassen aus

A) 45 bis 80 Gew.-Teilen Polyethylenterephthalat,

B) 15 bis 40 Gew.-Teilen anorganischen Verstärkungsmitteln,

C) 15 bis 20 Gew.-Teilen Polyalkylphosphonaten der Formel

$E_1$

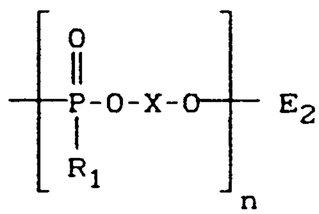

,

worin

$R_1$ für $C_1$- bis $C_6$-Alkyl steht,

X für die Formel

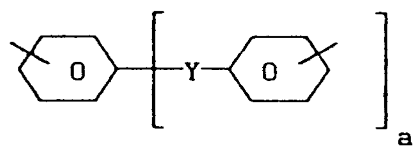

steht,

in der

Y eine Einfachbindung ist oder $C_1$- bis $C_3$-Alkylen, $C_5$- bis $C_{12}$-Cycloalkylen oder O, S, CO, $SO_2$ bedeutet und

a für 0 oder 1 steht, oder

X Naphthylen bedeutet,

$E_1$ für O-$R_2$, OH, O-X-OH steht, wobei $R_2$ $C_6$-bis $C_{10}$-Aryl bedeutet und X die obengenannte Bedeutung besitzt,

$E_2$

H, 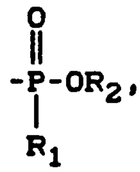 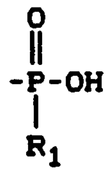 bedeutet, wobei

R₁ und R₂ die obengenannte Bedeutung haben und

n für ganze Zahlen von 2 bis 100 steht, und

D) gegebenenfalls 0,1 bis 10 Gew.-Teilen Verarbeitungshilfsmitteln.

**2.** Formmassen nach Anspruch 1, dadurch gekennzeichnet, daß sie als anorganische Verstärkungsmittel Glasfasern, Glaskugeln und/oder mineralische Füllstoffe enthalten.

**3.** Formmassen nach Ansprüchen 1 und 2, dadurch gekennzeichnet, daß sie als anorganische Verstärkungsmittel Glasfasern enthalten.

**4.** Formmassen nach Ansprüchen 1 bis 3, dadurch gekennzeichnet, daß sie als Polyalkylphosphonat
Bisphenol-F-polymethanphosphonat,
Bisphenol-A-polymethanphosphonat,
Dioxidiphenylpolymethanphosphonat,
Dioxidiphenylsulfonpolymethanphosphonat,
Catecholpolymethanphosphonat,
Resorcinpolymethanphosphonat und/oder
Hydrochinonpolymethanphosphonat enthalten.

**5.** Formmassen nach Ansprüchen 1 bis 4, dadurch gekennzeichnet, daß sie Kristallisationshilfsmittel, Entformungsmittel, Stabilisatoren, Fließhilfsmittel, Farbmittel, Farbpigmente und/oder Weichmacher enthalten.

**6.** Verwendung der flammgeschützten Polyethylenterephthalatformmassen nach einem oder vorhergehenden Ansprüche zur Herstellung von Formkörpern, Fasern oder Filmen.

**Claims**

**1.** Flameproofed polyethylene terephthalate moulding compounds of

A) 45 to 80 parts by weight polyethylene terephthalate,

B) 15 to 40 parts by weight inorganic reinforcing materials,

C) 15 to 20 parts by weight polyalkyl phosphonates corresponding to the formula

$E_1$

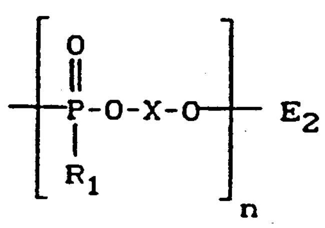 ,

in which

$R_1$ represents $C_{1-6}$ alkyl,

X stands for the formula

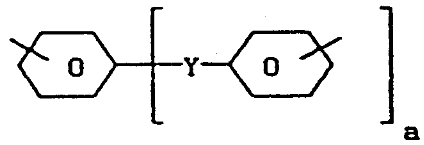

where

Y is a single bond or $C_{1-3}$ alkylene, $C_{5-12}$ cycloalkylene or O, S, CO, $SO_2$ and

a has the value 0 or 1, or

X represents naphthylene,

$E_1$ stands for O-$R_2$, OH, O-X-OH, where $R_2$ is $C_{6-10}$ aryl and Y is as defined above,

$E_2$

represents H, 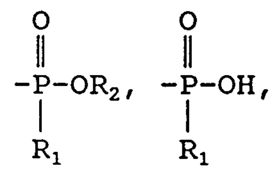

where $R_1$ and $R_2$ are as defined above, and

n is an integer of 2 to 100,

and

D) optionally 0.1 to 10 parts by weight processing aids.

**2.** Moulding copounds as claimed in claim 1, characterized in that they contain glass fibres, glass beads and/or mineral fillers as the inorganic reinforcing materials.

**3.** Moulding compounds as claimed in claims 1 and 2, characterized in that they contain glass fibres as the inorganic reinforcing materials.

**4.** Moulding compounds as claimed in claims 1 to 3, characterized in that they contain
bisphenol-F-polymethane phosphonate,
bisphenol-A-polymethane phosphonate,
dihydroxydiphenyl polymethane phosphonate,
dihydroxydiphenylsulfone polymethane phosphonate,
catechol polymethane phosphonate,
resorcinol polymethane phosphonate and/or
hydroquinone polymethane phosphonate
as the polyalkyl phosphonate.

**5.** Moulding compounds as claimed in claims 1 to 4, characterized in that they contain crystallization aids, mould release agents, stabilizers, flow aids, dyes, pigments and/or plasticizers.

**6.** The use of the flameproofed polyethylene terephthalate moulding compounds as claimed in any of the preceding claims for the production of mouldings, fibres or films.

**Revendications**

**1.** Compositions à mouler ignifuges à base de polytéréphtalate d'éthylène, comprenant

A) 45 à 80 parties en poids de polytéréphtalate d'éthylène,

B) 15 à 40 parties en poids d'agents inorganiques de renforcement,

C) 15 à 20 parties en poids de polyphosphonates d'alkyle de formule

$E_1$

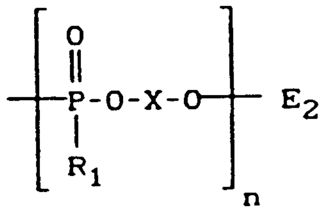 ,

dans laquelle

$R_1$ est un groupe alkyle en $C_1$ à $C_6$,

X répond à la formule

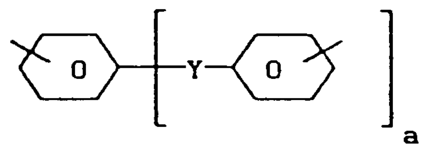

dans laquelle

Y est une liaison simple ou un groupe alkylène en $C_1$ à $C_3$, cycloalkylène en $C_5$ à $C_{12}$ ou représente O, S, CO, $SO_2$ et

a a la valeur 0 ou 1, ou bien

X est un groupe naphtylène,

$E_1$ est un groupe O-$R_2$, OH, O-X-OH, où $R_2$ est un radical aryle en $C_6$ à $C_{10}$ et X a la définition donnée ci-dessus,

$E_2$

représente H, 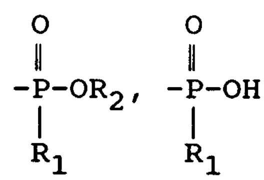 où

$R_1$ et $R_2$ ont la définition indiquée ci-dessus et

n représente des nombres entiers de 2 à 100, et

D) le cas échéant 0,1 à 10 parties en poids de substances auxiliaires de mise en oeuvre.

**2.** Compositions à mouler suivant la revendication 1, caractérisées en ce qu'elles contiennent comme agents inorganiques de renforcement des fibres de verre, des billes de verre et/ou des charges minérales.

**3.** Compositions à mouler suivant les revendications 1 et 2, caractérisées en ce qu'elles contiennent des fibres de verre comme agents inorganiques de renforcement.

**4.** Compositions à mouler suivant les revendications 1 à 3, caractérisées en ce qu'elles contiennent comme polyphosphonate d'alkyle
un polyméthanephosphonate de bisphénol F,
un polyméthanephosphonate de bisphénol A,
un polyméthanephosphonate de dioxydiphényle,
un polyméthanephosphonate de dioxydiphénylsulfone,
un polyméthanephosphonate de catéchol,
un polyméthanephosphonate de résorcinol et/ou
un polyméthanephosphonate d'hydroquinone.

**5.** Compositions à mouler suivant les revendications 1 à 4, caractérisées en ce qu'elles contiennent des substances auxiliaires de cristallisation, des agents de démoulage, des agents stabilisants, des

substances auxiliaires d'écoulement, des matières colorantes, des pigments et/ou des plastifiants.

**6.** Utilisation des compositions à mouler ignifuges à base de polytéréphtalate d'éthylène selon l'une des revendications précédentes pour la production de pièces moulées, de fibres ou de films.